# EUROPEAN PATENT SPECIFICATION

(11) **EP 0 898 881 B1**
(45) Date of publication and mention of the grant of the patent: **20.11.2002**
(21) Application number: 98202731.0
(22) Date of filing: 14.08.1998
(51) Int. Cl.: A01K 1/015, E01C 13/06

(54) **Ground covering materials and applications thereof**
Bodenbelagmaterialien und deren Verwendung
Matériaux couvre-sols et leur application

(30) Priority: 15.08.1997 NL 1006778; 06.03.1998 NL 1008513
(43) Date of publication of application: 03.03.1999
(73) Proprietor: Doesburg, Mels Elbert, 3067 PV Rotterdam (NL)
(72) Inventor: Doesburg, Mels Elbert, 3067 PV Rotterdam (NL)
(74) Representative: Volmer, Johannes Cornelis

(56) References cited:
- EP-A- 0 314 622
- DE-A- 4 218 829
- FR-A- 2 511 843
- FR-A- 2 753 211
- GB-A- 2 308 538
- US-A- 3 703 464
- US-A- 5 326 614
- PATENT ABSTRACTS OF JAPAN vol. 097, no. 005, 30 May 1997 & JP 09 009809 A (TACHIKAWA HEIWA NOUEN:KK), 14 January 1997
- DATABASE WPI Section Ch, Week 9005 Derwent Publications Ltd., London, GB; Class C03, AN 90-034141 XP002064362 & JP 01 312934 A (MITSUBISHI METAL CORP) , 18 December 1989
- PATENT ABSTRACTS OF JAPAN vol. 097, no. 007, 31 July 1997 & JP 09 075971 A (KATO TATSUO;OKI TOSHIO), 25 March 1997
- DATABASE WPI Section Ch, Week 9819 Derwent Publications Ltd., London, GB; Class G04, AN 98-210236 XP002082868 & JP 10 056876 A (CREATERRA INC) , 3 March 1998
- McGraw Hill Encyclopaedia of Science & Technology, 1987, 6th. Edition, Volume 4, pages 109-110

## Description

The present invention relates to a method for covering ground with a ground covering material, the ground being an area for animals or a playground.

It is known in the art to cover the ground, usually consisting of sand, of a riding school arena for horses with a particulate ground covering material, in order to prevent sand from flying about in dry conditions, and also to keep soggy arenas usable. Generally used natural ground covering material consists of chips of tree bark, tree rind shavings and other wood waste, in particular that of conifers. However, this known material has a major disadvantage, namely relatively low durability, because it very quickly decays, particularly under the influence of moisture, and disintegrates. This means in practice that the ground covering material in the riding school arena is usually replaced by a fresh layer after being used only a few times. The old layer is in this case generally mixed into the underlying sand or earth. After a number of refreshments, the riding school arena has to be completely dug out and provided with a new surface, including ground covering material. Providing a new layer of ground covering material each time is labour-intensive and lowers the quality of the arena, and a large quantity of material is used. In addition, digging out and refilling the arena means that the riding school arena cannot be used for a number of days, which is an economic disadvantage for the riding school owner.

Experiments have already been carried out in the past with other ground covering materials, such as floor covering and rubber chips. However, it was found that these alternatives did not meet the various requirements which have to be set for the ground covering material.

There is therefore still a need for a material with improved properties.

The object of the present invention is to provide such a ground covering material with improved properties, in particular improved durability.

Yet a further object of the present invention is to provide such a ground covering material that is suitable for many purposes, such as in riding school arenas, and in animal living quarters, such as at zoos and on children's farms, and also in playgrounds and ornamental gardens and parks.

Another object of the invention is to provide a method for covering the ground of an area for animals with a material with better properties than those of the ground covering materials normally used until now, in particular with better durability.

The ground covering method according to the invention is characterized in that the ground covering material comprises coconut husk.

Coconut husk is a residual material, remaining after the fruit, the coconut, and the juices thereof have been removed. Coconut bark is characterized by a structure of numerous tough fibres, as a result of which this material has great durability compared with the known materials. This ground covering material according to the invention could therefore be used, for example, for a number of years in a riding school arena before it requires replacement or refreshing. The fibres of the coconut husk further give excellent resilience, so that the material is very suitable for dressage arenas, but also for jumping arenas, since it permits a good take-off and soft landing. The use of Coconut husk as an absorbent material for oil spills on land or on water is known from US-3,703,464. The absorbent material absorbs several times its own weight of petroleum product, it coagulates the slick and keeps it from sinking, and forms a mass which lends itself to easy pick-up.

A further advantageous property of coconut husk is its moisture-regulating capacity. The husk can absorb a considerable quantity of moisture (rainwater, urine), but also release it in a regular way. On account of these properties; the coconut husk is suitable as a top surface material in both inside and outside arenas of riding schools.

The resilient nature of coconut husk also makes this material very suitable as a ground covering material in playgrounds, in particular near those items of playing equipment where the formation of bare patches occurs in grass as a result of intensive use, for instance near swings, roundabouts and climbing frames.

Furthermore, on account of its attractive appearance, the material comprising coconut husk according to the invention, is suitable for use as a(n) (ornamental) covering in gardens and parks, in which case the moisture-regulating character keeps the paths and lanes easy to walk on, even in damp conditions.

A further advantageous property of coconut husk is that it allows through sufficient air, on the one hand, to prevent choking of the substrate and, on the other hand, to inhibit the growth of weeds and other undesirable plants.

It has also been found that coconut husk has a fire-retardant action (about 20 min.), owing to the fact that when it is heated its pores open and release moisture. Discarded cigarette ends etc. cannot therefore cause the ground covering material to ignite easily.

It is pointed out that the use of coconut husk in a mixture with (compost) earth as a nutrient base for plants, in particular for orchids, is already known. JP-A-013 12934, for example, discloses a medium for the culture of plant prepared of cut coconut husk.

The invention also provides for a method for covering the ground of an area for animals with a ground covering material, in which a ground covering material comprising coconut husk according to the invention is laid on the ground.

A comparable method can be used for laying the ground covering material according to the invention on the ground of playgrounds, as defined in claim 2. The coconut husk can be laid and distributed on the ground in any suitable manner, by hand or by machine, such as by strewing and levelling out, for example with spade and rake.

The invention also relates to an area for animals, the ground of which is provided with a ground covering material. Such an area according to the invention is characterized in that the ground covering material is a ground covering material comprising coconut husk according to the invention.

The areas for animals according to the invention, in which coconut husk is used as the ground covering material, are not restricted to the riding school arenas discussed extensively above. Other areas comprise exercise runs, stalls and other animal dwellings in zoos and on children's farms etc. such as hutches for rabbits etc. In the case of these areas, apart from the durability, the moisture-regulating character of the coconut husk is an important and advantageous property.

Chips of the coconut husk are advantageously used, the chips having dimensions which are comparable with those of the known wood chips of conifers, i.e. of the order of magnitude of several centimetres, e.g. 1-6 cm.

As already stated above, coconut husk is a residual material remaining from the production of coconut and coconut milk. In those countries where such production is carried out on any significant scale, namely India, Sri Lanka and Vietnam, there is a plentiful supply of this residual material.

## Claims

1. Method for covering the ground of an area for animals with a ground covering material, **characterised in that** a ground covering material comprising coconut husk is laid on the ground.

2. Method for covering the ground of a playground with a ground covering material, **characterised in that** a ground covering material comprising coconut husk is laid on the ground.

3. Area for animals, the ground of which is provided with a ground covering material, **characterised in that** the ground covering material comprises coconut husk.

4. Area according to claim 3, **characterised in that** the area is a riding school arena.

5. Garden, of which the paths have been covered with a ground covering material, **characterised in that** said ground covering material comprises coconut husk.

6. Park, of which the lanes have been covered with a ground covering material, **characterised in that** said ground covering material comprises coconut husk.

## Patentansprüche

1. Verfahren zum Belegen des Bodens einer Fläche für Tiere mit einem Bodenbelagmaterial, **dadurch gekennzeichnet, dass** ein Bodenbelagmaterial, das Kokosnussschalen umfasst, auf den Boden aufgebracht wird.

2. Verfahren zum Belegen des Bodens eines Spielplatzes mit einem Bodenbelagmaterial, **dadurch gekennzeichnet, dass** ein Bodenbelagmaterial, das Kokosnussschalen umfasst, auf den Boden aufgebracht wird.

3. Fläche für Tiere, deren Boden mit einem Bodenbelagmaterial versehen ist, **dadurch gekennzeichnet, dass** das Bodenbelagmaterial Kokosnussschalen umfasst.

4. Fläche nach Anspruch 3, **dadurch gekennzeichnet, dass** die Fläche eine Reitschularena ist.

5. Garten, dessen Wege mit einem Bodenbelagmaterial belegt worden sind, **dadurch gekennzeichnet, dass** das Bodenbelagmaterial Kokosnussschalen umfasst.

6. Park, dessen Wege mit einem Bodenbelagmaterial belegt worden sind, **dadurch gekennzeichnet, dass** das Bodenbelagmaterial Kokosnussschalen umfasst.

## Revendications

1. Procédé pour recouvrir le sol d'une zone pour animaux à l'aide d'une matière de recouvrement de sol, **caractérisé par** le dépôt sur le sol d'une matière de recouvrement de sol comprenant de l'écorce de noix de coco.

2. Procédé de recouvrement du sol d'un espace de jeu à l'aide d'une matière de recouvrement de sol, **caractérisé par** le dépôt sur le sol d'une matière comprenant de l'écorce de noix de coco.

3. Zone pour animaux, dont le sol est revêtu d'une matière de recouvrement de sol, **caractérisée en ce que** la matière de recouvrement de sol comprend de l'écorce de noix de coco.

4. Zone selon la revendication 3, **caractérisée en ce que** la zone est une piste d'une école d'équitation.

5. Jardin, dont les sentiers ont été recouverts d'une matière de recouvrement de sol, **caractérisé en ce que** ladite matière de recouvrement de sol comprend de l'écorce de noix de coco.

6. Parc, dont les allées ont été recouvertes d'une matière de recouvrement de sol, **caractérisé en ce que** la matière de recouvrement de sol comprend de l'écorce de noix de coco.
